# EUROPEAN PATENT APPLICATION

(11) **EP 4 790 871 A1**
(43) Date of publication of application: **12.08.2026**
(21) Application number: 25218800.8
(22) Date of filing: 26.11.2025
(51) Int. Cl.: H02J 9/06, H02H 7/12

(54) **METHOD FOR DETECTING SHORT CIRCUIT OF DISCHARGER IN PARALLEL UPS SYSTEM AND PARALLEL UPS SYSTEM**

(30) Priority: 11.02.2025 CN 202510157972
(71) Applicant: Vertiv Tech Co., Ltd., Shenzhen Guangdong 518055 (CN)
(72) Inventor: FENG, Langlang, Shenzhen, 518055 (CN); DU, Hanyu, Shenzhen, 518055 (CN); SUN, Dong, Shenzhen, 518055 (CN); ZHANG, Zhichao, Shenzhen, 518055 (CN); ZHANG, Longyun, Shenzhen, 518055 (CN)
(74) Representative: Cousens, Nico

(57) **Abstract**

Provided in the embodiments of the present disclosure are a method for detecting short circuit of a discharger in a parallel UPS system and a parallel UPS system. The method includes: controlling a charging switch of a battery charger in a target UPS submodule to be closed in a case where the parallel UPS system operates under a condition of mains input without any battery, where the target UPS submodule is any UPS submodule from the at least two UPS submodules; and detecting, for each of the UPS submodules, a current on a common battery input side of the UPS submodule, and determining whether a discharger in the UPS submodule is short-circuited based on the current on the common battery input side of the UPS submodule.

## Description

The present application claims priority to Chinese Patent Application No. 202510157972.X, titled "METHOD FOR DETECTING SHORT CIRCUIT OF DISCHARGER IN PARALLEL UPS SYSTEM AND PARALLEL UPS SYSTEM", filed on February 11, 2025 with the China National Intellectual Property Administration.

### FIELD

The present disclosure relates to the field of power supply control, and in particular to a method for detecting short circuit of a discharger in a parallel UPS system and a parallel UPS system.

### BACKGROUND

A parallel UPS system (uninterruptible power supply) includes two or more standalone UPS systems. Outputs of the standalone UPS systems are connected in parallel to a common power distribution system. The parallel UPS system can meet a requirement of power supply capacity from an ultra-large data service center and has characteristics of high reliability of power supply, strong scalability, and integrated design. In a parallel UPS system, a discharger SCR (silicon-controlled rectifier) is configured to switch to a battery input mode without interruption when the input is abnormal, allowing load current to flow through the discharger.

In the parallel UPS system, two or more standalone UPS systems share a storage battery. In a case where the parallel UPS system operates under a condition of mains input without any battery, a short circuit in the discharger SCR may cause a voltage on the input side of the common battery to be greater than a safety voltage when the battery is not connected, posing a risk of electric shock. Moreover, if the battery is connected after the short circuit, a short circuit may occur between the mains power and the battery, which expand a fault scope and affects a stable operation of the parallel UPS system.

### SUMMARY

Embodiments of the present disclosure provide a method for detecting short circuit of a discharger in a parallel UPS system and a parallel UPS system. With the above, problems of power supply reliability and power safety caused due to a short-circuit discharger in the parallel UPS system are solved.

In a first aspect, a method for detecting short circuit of a discharger in a parallel UPS system is provided in an embodiment of the present disclosure. The method is applied to a parallel UPS system, the parallel UPS system includes a circuit subsystem and a control subsystem, the control subsystem is configured to monitor an operating state of the circuit subsystem, the circuit subsystem includes at least two UPS submodules, and the at least two UPS submodules share a common battery; and the method includes:
controlling a charging switch of a battery charger in a target UPS submodule to be closed in a case where the parallel UPS system operates under a condition of mains input without any battery, where the target UPS submodule is any UPS submodule from the at least two UPS submodules; and
detecting, for each of the UPS submodules, a current on a common battery input side of the UPS submodule, and determining whether a discharger in the UPS submodule is short-circuited based on the current on the common battery input side of the UPS submodule.

In the embodiment, the target UPS submodule is randomly selected from the parallel UPS system to construct an inductive current short-circuit loop through a faulty submodule. Hence, the faulty submodule is located quickly and accurately and the fault impact is reduced. Such solution has a simple timing and is easy to implement.

In an embodiment, the controlling a charging switch of a battery charger in a target UPS submodule to be closed includes:
determining whether a voltage on an input side of the common battery is abnormal, and determining that a discharger short circuit fault exists in the parallel UPS system in a case where the voltage on the input side of the common battery is abnormal; and
controlling the charging switch of the battery charger in the target UPS submodule to be closed.

In the method according to this embodiment, whether there is a discharger short circuit fault is determined quickly and accurately from the voltage on the input side of the common battery, so that a faulty submodule is located only when a fault exists, avoiding a positioning operation under normal circumstances.

In an embodiment, the determining whether a voltage on an input side of the common battery is abnormal includes:
acquiring, in real time, a mains input voltage and the voltage on the input side of the common battery; and
determining that the voltage on the input side of the common battery is abnormal, in a case where a voltage difference between the mains input voltage and the voltage on the input side of the common battery keeps less than a first preset threshold for a first preset time period.

In the method according to this embodiment, the voltage on the input side of the common battery is directly compared with the mains input voltage, achieving real-time monitoring of the voltage on the input side of the common battery.

In an embodiment, the controlling the charging switch of the battery charger in the target UPS submodule to be closed includes:
determining, based on a power walk-in timing signal, the target UPS submodule from the at least two UPS submodules; and
controlling the charging switch of the battery charger in the target UPS submodule to be closed.

In the parallel UPS system, the target UPS submodule produces an inductive current based on the power walk-in timing signal. The inductive current definitely passes through a CT current sensor on the common battery input side of the faulty submodule, so that the faulty module having the short-circuited discharger SCR in the parallel UPS system is located quickly, the risk of electric shock is reduced, and the power supply reliability and safety of the parallel UPS system are improved.

In an embodiment, the method further includes:
controlling a switch transistor of the battery charger in the target UPS submodule to be turned on based on a preset duty cycle.

In the method according to this embodiment, setting of the preset duty cycle requires consideration of a magnitude of the inductive current that electronic components can withstand, so as to ensure a normal operation of the circuit.

In an embodiment, the determining whether a discharger in the UPS submodule is short-circuited based on the current on the common battery input side of the UPS submodule includes:
determining that the discharger in the UPS submodule is short-circuited, in a case where the current on the common battery input side of the UPS submodule keeps less than a second preset threshold for a second preset time period.

In the method according to this embodiment, determination on the current is performed based on the second preset threshold and the second preset time period, so that whether the discharger is short-circuited is determined more accurately.

In an embodiment, the method further includes:
controlling a mains input switch of the UPS submodule to be opened on determining that the discharger in the UPS submodule is short-circuited.

In the method according to this embodiment, on determining that the discharger is short-circuited, the mains input switch of the submodule is opened to avoid direct connection between the input side of the common battery and the mains output, which may cause a risk of electric shock.

In a second aspect, a parallel UPS system is provided in an embodiment of the present disclosure. The parallel UPS system includes a circuit subsystem and a control subsystem, the control subsystem is configured to monitor an operating state of the circuit subsystem, the circuit subsystem includes at least two UPS submodules, and the at least two UPS submodules share a common battery. The control subsystem includes:
a circuit control module, configured to control a charging switch of a battery charger in a target UPS submodule to be closed in a case where the parallel UPS system operates under a condition of mains input without any battery, where the target UPS submodule is any UPS submodule from the at least two UPS submodules; and
a faulty detection module, configured to detect, for each of the UPS submodules, a current on a common battery input side of the UPS submodule, and determine whether a discharger in the UPS submodule is short-circuited based on the current on the common battery input side of the UPS submodule.

In a third aspect, a computer apparatus is provided in an embodiment of the present disclosure. The computer apparatus includes a memory and a processor, where
the memory stores computer executable instructions.
the processor executes the computer executable instructions stored in the memory to implement the first aspect and/or any of the embodiments in the first aspect.

In a fourth aspect, a computer-readable storage medium is further provided in an embodiment of the present disclosure. The computer-readable storage medium has computer executable instructions stored thereon, and the computer executable instructions, when executed by a processor, implements the first aspect and/or any of the embodiments in the first aspect.

In a fifth aspect, a computer program product is further provided in an embodiment of the present disclosure. The computer program product includes a computer program. The computer program, when executed by a processor, implements the first aspect and/or any of the embodiments in the first aspect.

Provided in the embodiments of the present disclosure are a method for detecting short circuit of a discharger in a parallel UPS system and a parallel UPS system. The method includes: controlling a charging switch of a battery charger in a target UPS submodule to be closed in a case where the parallel UPS system operates under a condition of mains input without anybattery, where the target UPS submodule is any UPS submodule from the at least two UPS submodules; and detecting, for each of the UPS submodules, a current on a common battery input side of the UPS submodule, and determining whether a discharger in the UPS submodule is short-circuited based on the current on the common battery input side of the UPS submodule. According to the present disclosure, a target UPS submodule is randomly selected from the parallel UPS system to construct an inductive current short-circuit loop through a faulty submodule. Hence, the faulty submodule is quickly and accurately located and the fault impact is reduced. Such solution has a simple timing and is easy to implement.

### BRIEF DESCRIPTION OF THE DRAWINGS

Accompanying drawings, incorporated in and constitute a part of this specification, illustrate embodiments consistent with the present disclosure and, together with the specification, explain principles of the present disclosure.
FIG. 1 is a structural diagram of a UPS system according to an embodiment;
FIG. 2 is a first schematic structural diagram of a parallel UPS system according to an embodiment;
FIG. 3 is a first schematic flow chart of a method for detecting short circuit of a discharger in a parallel UPS system according to an embodiment;
FIG. 4 is a schematic structural diagram of a charger according to an embodiment;
FIG. 5 is a second schematic structural diagram of a parallel UPS system according to an embodiment;
FIG. 6 is a second schematic flow chart of a method for detecting short circuit of a discharger in a parallel UPS system according to an embodiment;
FIG. 7 is a third schematic flow chart of a method for detecting short circuit of a discharger in a parallel UPS system according to an embodiment;
FIG. 8 is a timing diagram for detecting short circuit of a discharger in a parallel UPS system according to an embodiment;
FIG. 9 is a third schematic structural diagram of a parallel UPS system according to an embodiment; and
FIG. 10 is a schematic structural diagram of a computer device according to the present disclosure.

Specific embodiments of the present disclosure are shown through the above-mentioned drawings, and are described in further detail below. These drawings and descriptions are not intended to limit the scope of the concept of the present disclosure in any way, but are intended to illustrate the concepts of the present disclosure for those skilled in the art by referring to the specific embodiments.

### DETAILED DESCRIPTION

Exemplary embodiments are described in detail hereinafter, and examples thereof are illustrated in the accompanying drawings. When the following description refers to the drawings, the same numbers in different drawings refer to the same or similar elements, unless otherwise indicated. The implementations described in the following exemplary embodiments do not represent all implementations consistent with the present disclosure. On the contrary, they are merely examples of the apparatus and method consistent with aspects of the present disclosure as detailed in the appended claims.

In the description of the present disclosure, terms "first" and "second" are for descriptive purposes only and shall not be understood as indicating or implying relative importance or implicitly indicating quantities of indicated technical features. Therefore, a feature defined with "first" or "second" may explicitly or implicitly include one or more such feature. In the description of this specification, "plurality (multiple)" means two or more, unless otherwise expressly and specifically limited.

In the description of the present disclosure, it is to be noted that unless otherwise clearly defined and limited, the terms "connect" and "link" should be understood in a broad sense. For example, a connection may be a fixed connection, or a detachable connection, or an integral connection; a connection may be a mechanical connection or an electrical connection; and a connection may be a direct connection, or an indirect connection through an intermediate medium. For those of ordinary skills in the art, specific meanings of the terms in the present disclosure may be understood on a case-by-case basis.

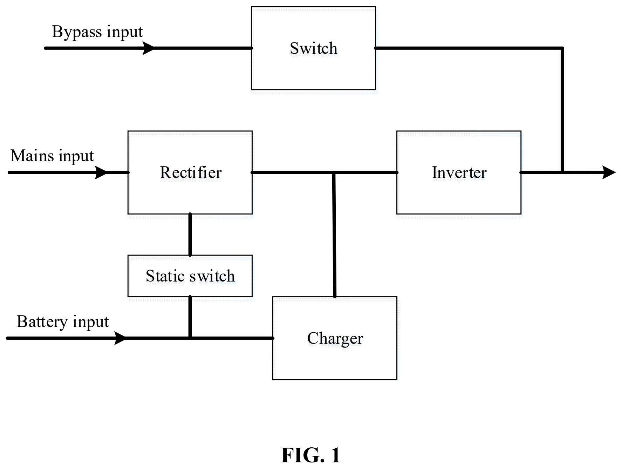

A UPS system (Uninterruptible Power System) is commonly used power equipment, and a battery is an indispensable component thereof. Typically, as shown in FIG. 1, a UPS system mainly includes a battery pack, a rectifier, an inverter, and a static switch. Electrical energy is stored in the battery in a form of direct current (DC), which enables the UPS to output voltage to the outside in the event of mains input failure. The parallel UPS system includes two or more standalone UPS systems. Outputs of the standalone UPS systems are connected in parallel to a common power distribution system. The parallel UPS system can meet a requirement of power supply capacity from an ultra-large data service center and has characteristics of high reliability of power supply, strong scalability, and integrated design.

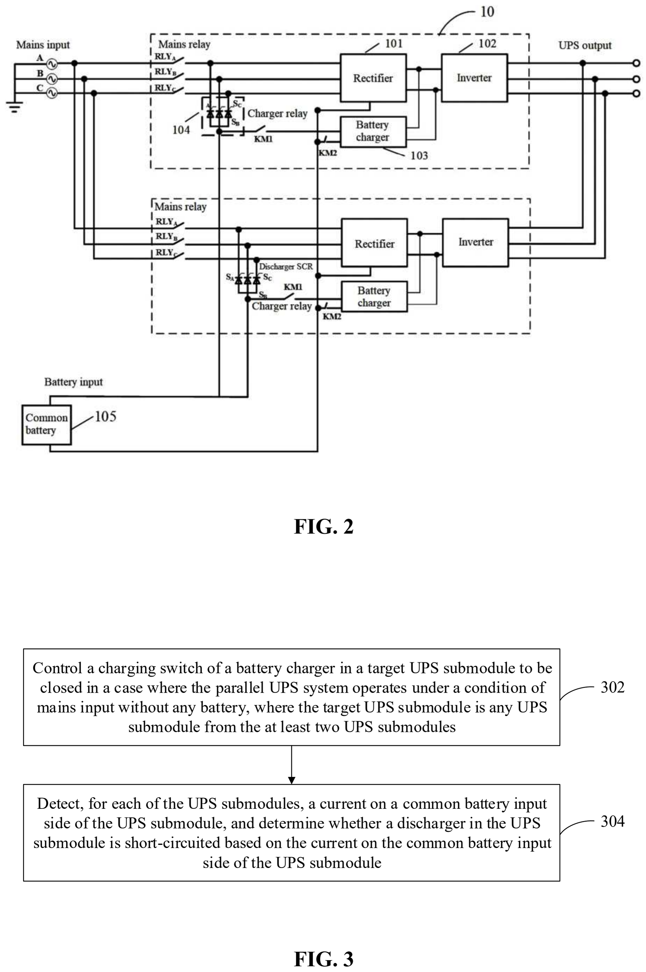

As shown in FIG. 2, a parallel UPS system is provided. The parallel UPS system includes a circuit subsystem and a control subsystem. The control subsystem is configured to monitor an operating state of the circuit subsystem. The circuit subsystem includes at least two UPS submodules 10. Each UPS submodule 10 is a standalone UPS system, including a rectifier 101, an inverter 102, a battery charger 103, a discharger SCR 104 and an energy storage battery. The energy storage battery may be shared by the at least two UPS submodules 10, as a common battery 105. The discharger SCR 104 is configured to switch to a battery input mode without interruption when the mains input is abnormal, allowing load current to flow through the discharger SCR 104.

In an implementation, in the system as shown in FIG. 2, in a case where the mains input is normal, for each UPS submodule 10, mains relays R_{LYA}, R_{LYB}, and R_{LYC} are closed, dischargers S_{A}, S_{B}, and S_{C} are turned off, a positive relay KM1 and a negative relay KM2 of a charger are closed, and the mains power is inputted to the UPS submodule. The mains power passes through the rectifier 101, part of which is delivered to the inverter 102 as a UPS output, and part of which is utilized for charging the common battery 105 through the battery charger 103. In a case where the mains power is abnormal, the mains relays R_{LYA}, R_{LYB}, R_{LYC} are opened, the dischargers S_{A}, S_{B}, S_{C} are turned on, switching to a battery input mode. In this case, the positive relay KM1 and the negative relay KM2 of the charger are opened, stopping charging the common battery 105.

In the above-mentioned structure, if the discharger SCR104 is short-circuited, the control subsystem is not able to effectively manage the common battery 105, causing damage to the UPS submodule 10 or expansion of an impact of a single fault, which further results in breakdown of the parallel UPS system and thereby a risk of power outage for a load. As a critical power device in a switching process, the discharger SCR needs to be monitored online in real time for a short-circuit fault.

Especially for the structure of the common battery 105, in a case where the parallel UPS system operates under a condition of mains input without any battery, short circuit in the discharger SCR 104 may cause a voltage on the input side of the common battery to be greater than the safety voltage when the common battery 105 is not connected, posing a risk of electric shock. Moreover, if the common battery 105 is connected after the short circuit, a short circuit may occur between the mains power and the common battery 105, which expands a fault scope and affects a stable operation of the parallel UPS system. The existing solution requires connection to a dummy load and cutoff of the power supply. Whether the SCR is short-circuited is indirectly detected by measuring the voltage and current at terminals of the dummy load. Hence, the load is powered down when the parallel UPS system is in a normal operating condition.

Regarding the above technical problem, a method for detecting short circuit of a discharger in a parallel UPS system is provided in an embodiment of the present disclosure. The method is applied to a parallel UPS system. The parallel UPS system includes a circuit subsystem and a control subsystem. The control subsystem is configured to monitor an operating state of the circuit subsystem. The circuit subsystem includes at least two UPS submodules 10, and the at least two UPS submodules 10 share a common battery. As shown in FIG. 3, the method includes the following steps 302 to 304.

In step 302, a charging switch of a battery charger in a target UPS submodule is controlled to be closed in a case where the parallel UPS system operates under a condition of mains input without any battery, where the target UPS submodule is any UPS submodule from the at least two UPS submodules.

In step 304, for each of the UPS submodules, a current on a common battery input side of the UPS submodule is detected, and it is determined whether a discharger in the UPS submodule is short-circuited based on the current on the common battery input side of the UPS submodule.

The condition of mains input without battery refers to an operating condition in which a UPS submodule is powered by a mains input on the main circuit, and a battery side is not connected to the common battery 105. In this condition, if the common battery 105 is abnormal, charging switches of the battery chargers 103 in all UPS submodules are opened, stopping charging the common battery 105. The charger switch includes at least one of a positive relay KM1 and a negative relay KM2 of the charger.

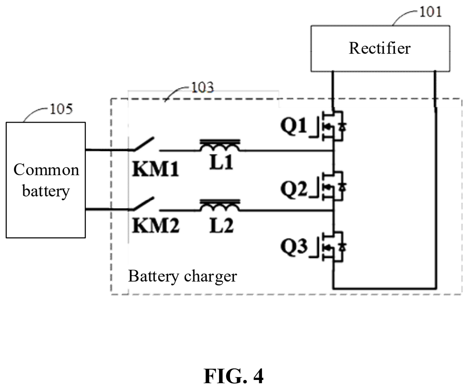

As shown in FIG. 4, in the circuit structure of the battery charger 103, a switch transistor Q1, as a control switch at the input end, is configured to control a current input from the rectifier 101 to the battery charger 103. When the switch transistor Q1 is turned on, the current outputted from the rectifier 101 flows to the common battery 105 through an inductor L1. When the switch transistor Q1 is turned off, the current is cut off, but the magnetic field energy in the inductor L1 is maintained for a period of time and powers the common battery 105 via another path (such as a freewheeling diode or another switch transistor). Switch transistor Q2 and switch transistor Q3 form a certain form of converter (such as a DC-DC converter) to adjust an output voltage and current to meet a charging requirement of the common battery 105.

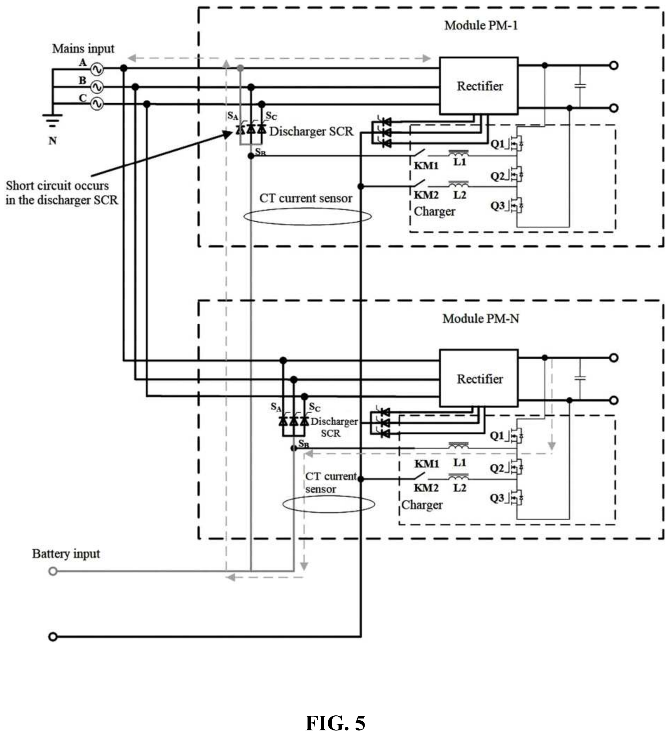

In a case where the discharger SCR104 is short-circuited, taking the inductor L1 as an example, if the positive relay KM1 of the charger is closed, the inductor L1 bears a voltage difference between a DC bus voltage and the mains voltage, and the inductive current increases. As shown in FIG. 5, an example in which the discharger short circuit fault occurs in module PM-1, and module PM-N is determined as the target UPS submodule is provided. Through the bus capacitor C of module PM-N, the switch transistor Q1, the inductor L1, the charger relay KM1, the input side of the common battery, the short-circuited discharger SA of the faulty module PM-1, and other modules on the AC side or rectifiers, a current of the inductor L1 definitely passes through the module in which the discharger SCR is short-circuited. Therefore, the charging switch of the battery charger in the target UPS submodule is closed, and the current on the common battery input side in each UPS subsystem is detected, and thereby it can be determined, based on the current, whether the discharger SCR is short-circuited. A CT current sensor may be installed on the common battery input side of each UPS subsystem to detect the current.

It should be noted that the target UPS submodule is determined randomly. As long as there is one UPS submodule has its charging switch of the battery charger closed, the current on the common battery input side of the faulty submodule increases. In order to prevent excessive current from damaging a device, usually only one target UPS submodule is selected.

In the method according to the above embodiment, a charging switch of a battery charger in a target UPS submodule is controlled to be closed in a case where the parallel UPS system operates under a condition of mains input without any battery, where the target UPS submodule is any UPS submodule from the at least two UPS submodules; and for each of the UPS submodules, a current on a common battery input side of the UPS submodule is detected, and it is determined whether a discharger in the UPS submodule is short-circuited based on the current on the common battery input side of the UPS submodule. According to the present disclosure, a target UPS submodule is randomly selected from the parallel UPS system to construct an inductive current short-circuit loop through a faulty submodule. Hence, the faulty submodule is quickly and accurately located and the fault impact is reduced. Such solution has a simple timing and is easy to implement.

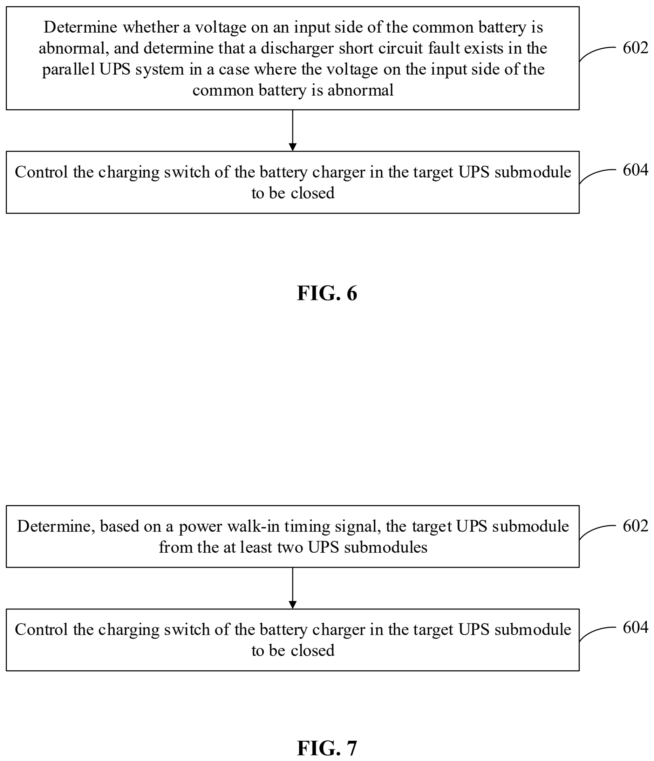

In an embodiment, as shown in FIG. 6, the controlling a charging switch of a battery charger in a target UPS submodule to be closed includes steps 602 to 604.

In step 602, it is determined whether a voltage on an input side of the common battery is abnormal, and it is determining that a discharger short circuit fault exists in the parallel UPS system in a case where the voltage on the input side of the common battery is abnormal.

In step 604, a charging switch of a battery charger in the target UPS submodule is controlled to be closed.

Normally, when a UPS operates in a no battery condition, an output of the rectifier does not charges the common battery through the battery charger, and the voltage on the input side of the common battery should be 0, in theory. If the discharger SCR is short-circuited, the input side of the common battery is directly connected to the mains power, and the voltage increases, exceeding the safety voltage.

To detect short circuit of a discharger, it is first determined, based on a voltage on an input side of the common battery, whether a discharger short circuit fault exists in the parallel UPS system, and then the charging switch of the battery charger in the target UPS submodule is controlled to be closed, constructing an inductive current short-circuit loop through a faulty submodule, thereby locating the fault.

It should be understood that after a charging switch in any UPS submodule is closed, an inductive current therein flows through the faulty submodule. Therefore, in order to avoid damage to a device due to an excessive current, usually only one UPS submodule is selected as the target UPS submodule. The target UPS submodule is randomly selected and may be a faulty submodule.

In addition, in the parallel UPS system, in a case where there are dischargers SCR disposed between the positive end of the common battery and the rectifier and between the negative end of the common battery and the rectifier, in the circuit shown in FIG. 5, a current of the inductor L1 flows through each UPS submodule due to short circuit of the discharger SCR between the battery on a positive half of the common battery and the rectifier in each UPS submodule. The positive relay KM1 of the charger in the target UPS submodule may be controlled to be closed, constructing an inductor L1 current short-circuit loop, to detect whether the discharger connected to the positive half of the common battery is short-circuited. Similarly, a current of the inductor L2 flows through each UPS submodule due to short circuit of the discharger SCR between the negative half of the common battery and the rectifier in each UPS submodule. The negative relay KM2 of the charger in the target UPS submodule may be controlled to be closed, constructing an inductor L2 current short-circuit loop, to detect whether the discharger connected to the negative half of the common battery is short-circuited.

In the method according to this embodiment, whether there is a discharger short circuit fault is determined quickly and accurately from the voltage on the input side of the common battery, so that a faulty submodule is located only when a fault occurs, avoiding a positioning operation under normal circumstances.

In an embodiment, the determining whether a voltage on an input side of the common battery is abnormal includes:
acquiring, in real time, a mains input voltage and the voltage on the input side of the common battery; and
determining that the voltage on the input side of the common battery is abnormal, in a case where a voltage difference between the mains input voltage and the voltage on the input side of the common battery keeps less than a first preset threshold for a first preset time period.

By detecting the voltage difference between the mains input voltage and the voltage on the input side of the common battery, it is quickly determined whether the voltage on the input side of the common battery is abnormal. In a case where the voltage difference is less than a first preset threshold V_{SCR_diff} and is maintained in this state for the first preset time period T_{diff_Confirm}, it is determined that the voltage on the input side of the common battery is abnormal.

In the method according to this embodiment, the voltage on the input side of the common battery is directly compared with the mains input voltage, achieving real-time monitoring of the voltage on the input side of the common battery.

In an embodiment, as shown in FIG. 7, the controlling a charging switch of a battery charger in a target UPS submodule to be closed includes steps 702 to 704.

In step 702, the target UPS submodule is determined from the at least two UPS submodules, based on a power walk-in timing signal.

In step 704, a charging switch of a battery charger in the target UPS submodule is controlled to be closed.

The power walk-in timing signal is for reducing an inrush current when the system starts. In the parallel UPS system, starting multiple standalone UPS systems simultaneously may generate a large inrush current, causing adverse effects on the power grid and the parallel UPS system. The power walk-in timing signal ensures that individual standalone UPS systems start up in a timely and orderly manner by accurately controlling startup timing of the standalone UPS systems, thereby effectively reducing a startup inrush current and protecting a safe and stable operation of the power grid and the parallel UPS system.

In addition, in the parallel UPS system, a generator is usually provided as a backup power source to cope with a possible power failure. However, the generator has a limit capacity, and an excessive starting current of the parallel UPS system may exceed a load capacity of the generator. The power walk-in timing signal can optimize the startup timing and thereby reduce a demand of the parallel UPS system for a generator capacity, enabling the generator to stably and reliably provide power support to the parallel UPS system on occurrence of a power failure.

When the power supply of the parallel UPS system is switched back to the generator from the battery, according to the power walk-in timing logic, the UPS submodules are gradually switched back to an input port of the generator. The power walk-in timing signal is quickly transmitted between at least one UPS submodule via CAN communications. In the process of locating a faulty submodule, the power walk-in timing signal is utilized to randomly close a charging switch of a battery in one UPS submodule in the parallel UPS system, constructing an inductive current loop passing through the faulty module in which the discharger SCR is short-circuited.

In the parallel UPS system, the target UPS submodule constructs an inductive current according to the power walk-in timing signal. The inductive current definitely passes through a CT current sensor on the common battery input side of the faulty submodule, so that the faulty module having the short-circuited discharger SCR in the parallel UPS system is located quickly, the risk of electric shock is reduced, and the power supply reliability and safety of the parallel UPS system are improved.

In an embodiment, the method further includes:
controlling a switch transistor of the battery charger in the target UPS submodule to be turned on based on a preset duty cycle.

The preset duty cycle may be a fixed value. By controlling the switch transistor of the battery charger with the preset duty cycle, the inductor bears a voltage difference between a DC bus voltage and the mains voltage, so that the inductive current is gradually increased and thereby is detected. Setting of the preset duty cycle requires consideration of a magnitude of the inductive current that electronic components can withstand, so as to ensure a normal operation of the circuit.

In an embodiment, the determining, for each of the UPS submodules, whether a discharger in the UPS submodule is short-circuited based on the current on the common battery input side of the UPS submodule includes:
determining that the discharger in the UPS submodule is short-circuited, in a case where the current on the common battery input side of the UPS submodule keeps less than a second preset threshold for a second preset time period.

Only the UPS submodule with the faulty discharger SCR can be detected that the inductive current keeps greater than the second preset threshold I_{SCR_short} for the second preset time period T_{short_Confirm}. On determining that the discharger in the UPS submodule is short-circuited, a mains input switch of the UPS submodule is controlled to be opened, so that the UPS submodule exits the parallel UPS system.

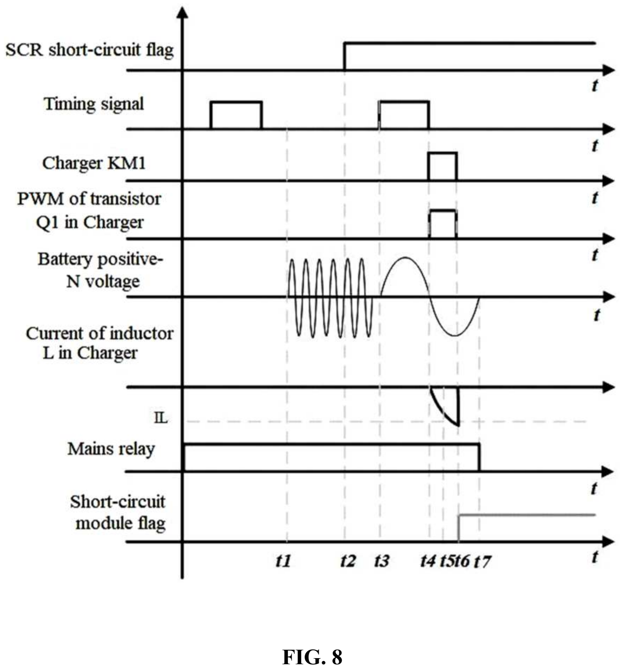

For ease of understanding, a timing diagram for detecting short circuit of a discharger in a parallel UPS system in the circuit as FIG. 5 is given below, as shown in FIG. 8, and the timing diagram is explained as follows.
(1) Before time t1: the mains relays R_{LYA}, R_{LYB}, and R_{LYC} are closed, supplying load current, and the positive relay KM1 and the negative relay KM2 of the charger are opened. The battery is not connected, and voltages of positive and negative terminals of the battery input to N are both 0V.
(2) At time t1, it is assumed that the discharger in module PM-1 is short-circuited.
   Specifically, it is determined whether a faulty submodule exists by obtaining a voltage difference between the mains input voltage and the voltage on the input side of the common battery in real time. All UPS submodules in the parallel UPS system set a discharger SCR short-circuit fault flag at time t2, and activate CT current detection on each of the UPS submodules.
(3) At time t3, according to the power walk-in timing signal, at a time when the mains input voltage crosses zero, a relay in a battery charger in at least one UPS submodule is closed, and the transistor Q1 is turned on with a fixed duty cycle. The inductor L1 bears the voltage difference between the DC bus voltage and the mains voltage, and the inductive current increases gradually.
(4) At time t4, the inductive current in the battery charger gradually increases; and since the discharger in a faulty submodule is short-circuited, the inductive current flows through a short-circuited discharger module of the faulty submodule.
(5) Magnitude of a CT current on the common battery input side of each UPS submodule is detected. The current is greater than a second preset threshold I_{SCR_short} at time t5, and after the second preset time period elapses, the faulty submodule is determined at time t6.
(6) After the faulty submodule is determined at time t6, the faulty submodule is shut down and the mains power relay of the faulty submodule is opened at time t7. Meanwhile, detection on the voltage difference is performed. After the voltage difference becomes greater than a first preset threshold, the discharger SCR short-circuit flag of each submodule is cleared quickly and automatically.

In the method according to the above embodiment, an inductive current short-circuit loop through the faulty submodule is randomly constructed in the parallel UPS system according to the timing signal, so that location of the faulty submodule is achieved. The method has the following advantages: the faulty submodule is located fast with a low cost, without adding an additional hardware sampling point; the power supply safety and reliability of the parallel UPS system is improved, avoiding the risk of electric shock; online monitoring is achieved, having no need to cut off the power supply, so that the reliability of load power supply is ensured; the timing is simple and easy for engineering implementation, the impact of the discharger SCR short-circuit fault is reduced, and the reliability of the parallel UPS system is improved.

It is to be understood that, although the steps in the flowchart of the foregoing embodiment are shown sequentially according to arrow indications, the steps are not necessarily performed according to the sequence indicated by the arrows. Unless otherwise explicitly specified herein, the sequence in which the steps are performed are not limited, and the steps may be performed in other sequences. In addition, at least some of steps in the flowchart related in the above embodiments may include multiple steps or stages. The steps or stages are not necessarily performed simultaneously, but may be performed at different times. Moreover, the sub-steps or stages are not necessarily performed sequentially, but may be performed in turn or alternately with another step or at least some of the other steps or stages.

Based on the same inventive concept, a parallel UPS system is further provided in an embodiment of the present disclosure. The problem solution provided by the parallel UPS system is similar to the implementation recorded in the above method. Therefore, specific definitions in one or more embodiments of the parallel UPS system provided below may refer to the above definitions on the method for detecting short circuit of a discharger in a parallel UPS system, which are not repeated here.

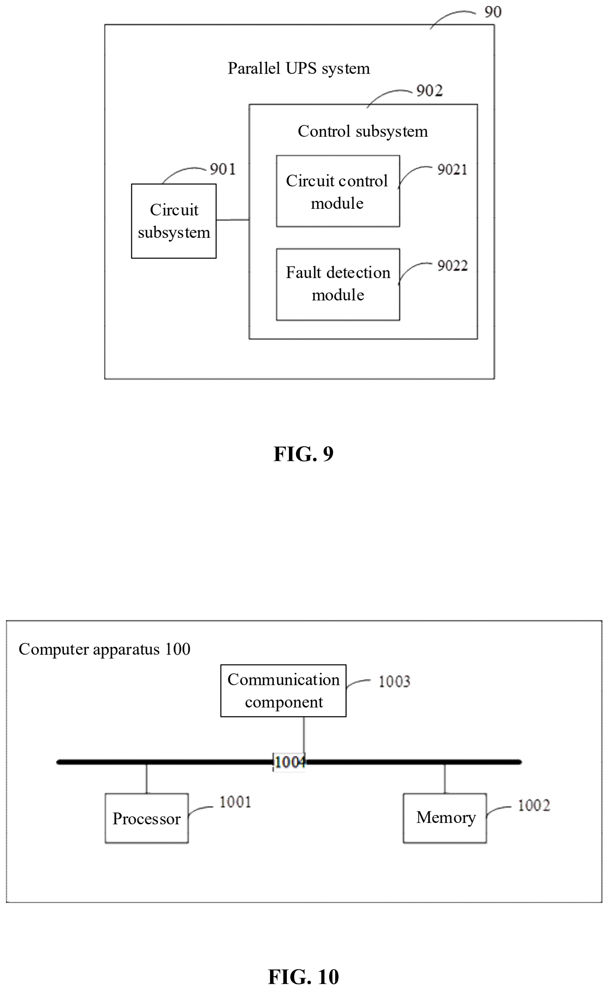

In an embodiment, as shown in FIG. 9, the parallel UPS system 90 includes a circuit subsystem 901 and a control subsystem 902. The control subsystem 902 is configured to monitor an operating state of the circuit subsystem 901, the circuit subsystem 901 includes at least two UPS submodules, and the at least two UPS submodules share a common battery; and the control subsystem 902 includes a circuit control module 9021 and a faulty detection module 9022.

The circuit control module 9021 is configured to control a charging switch of a battery charger in a target UPS submodule to be closed in a case where the parallel UPS system operates under a condition of mains input without any battery, where the target UPS submodule is any UPS submodule from the at least two UPS submodules.

The faulty detection module 9022 is configured to detect, for each of the UPS submodules, a current on a common battery input side of the UPS submodule, and determine whether a discharger in the UPS submodule is short-circuited based on the current on the common battery input side of the UPS submodule.

In an embodiment, the circuit control module 9021 is further configured to:
determine whether a voltage on an input side of the common battery is abnormal, and determine that a discharger short circuit fault exists in the parallel UPS system in a case where the voltage on the input side of the common battery is abnormal; and
control the charging switch of the battery charger in the target UPS submodule to be closed.

In an embodiment, the circuit control module 9021 is further configured to:
acquire, in real time, a mains input voltage and the voltage on the input side of the common battery; and
determine that the voltage on the input side of the common battery is abnormal, in a case where a voltage difference between the mains input voltage and the voltage on the input side of the common battery keeps less than a first preset threshold for a first preset time period.

In an embodiment, the circuit control module 9021 is further configured to:
determine, based on a power walk-in timing signal, the target UPS submodule from the at least two UPS submodules; and
control the charging switch of the battery charger in the target UPS submodule to be closed.

In an embodiment, the circuit control module 9021 is further configured to:
control a switch transistor of the battery charger in the target UPS submodule to be turned on based on a preset duty cycle.

In an embodiment, the faulty detection module 9022 is further configured to:
determine that the discharger in the UPS submodule is short-circuited, in a case where the current on the common battery input side of the UPS submodule keeps less than a second preset threshold for a second preset time period.

In an embodiment, the faulty detection module 9022 is further configured to:
control a mains input switch of the UPS submodule to be opened on determining that the discharger in the UPS submodule is short-circuited.

The modules in the parallel UPS system may be fully or partially implemented by software, hardware or a combination thereof. Each of the modules may be embedded in or independent of a processor of a computer apparatus in a form of hardware, or may be stored in a memory of the computer apparatus in a form of software, for the processor to call and execute operations corresponding to the modules.

FIG. 10 is a schematic structural diagram of a computer apparatus according to the present disclosure. As shown in FIG. 10, the computer apparatus 100 provided in the embodiment includes at least one processor 1001 and a memory 1002. Alternatively, the apparatus 100 further includes a communication component 1003. The processor 1001, the memory 1002 and the communication component 1003 are connected via a bus 1004.

In a specific implementation, the at least one processor 1001 executes computer executable instructions stored in the memory 1002, and thereby the at least one processor 1001 executes the above method.

A specific implementation of the processor 1001 may be referred to the method embodiments described above. Implementation principles and technical effects of the processor are similar to the method embodiments and are not repeated here in this embodiment.

In the above embodiment, it should be understood that the processor may be a central processing unit (CPU), or other general-purpose processor, digital signal processor (DSP), application specific integrated circuit (ASIC), and the like. A general-purpose processor may be a microprocessor or any conventional processor. The steps of the method disclosed in conjunction with the present disclosure may be directly embodied and executed by a hardware processor, or be executed by a combination of hardware and software modules in the processor.

The memory may include a high-speed random-access memory (RAM), and may further include a non-volatile memory (NVM), such as at least one disk memory.

The bus may be an industry standard architecture (ISA) bus, a peripheral component interconnect (PCI) bus, an extended industry standard architecture (EISA) bus, or the like. The bus may include an address bus, a data bus, a control bus, and the like. For ease of presentation, the bus in the drawings of the present disclosure is not limited to only one bus or one type of buses.

A computer program product is further provided in an embodiment of the present disclosure. The computer program product includes a computer program that, when executed by a processor, implements the method in any of the above embodiments.

A computer-readable storage medium is further provided in the present disclosure. The computer-readable storage medium has computer executable instructions stored thereon. The computer executable instructions, when executed by a processor, implement the method as described in any of the above embodiments.

The computer-readable storage medium may be implemented by any type of volatile or non-volatile storage device or a combination thereof. For example, the computer-readable storage medium is a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The readable storage medium may be any available medium that can be accessed by a general or dedicated computer.

An exemplary readable storage medium is coupled to the processor such that the processor can read information from the readable storage medium and write information to the readable storage medium. Apparently, the readable storage medium may be an integral part of the processor. The processor and the readable storage medium may be located in an application specific integrated circuit (ASIC). Apparently, the processor and the readable storage medium may be discrete components in the device.

The modules are defined only based on logical functions, and there may be other manners of defining modules in actual implementations. For example, multiple units or components may be combined with each other or integrated into another system, or some features may be omitted or not implemented. In addition, the shown or discussed coupling or direct coupling or communication connection may be indirect coupling or communication connection through some interfaces, apparatuses or units, and may be electrical, mechanical or in other forms.

The units described as separate components may or may not be physically separated. Components shown as units may or may not be physical units, that is, the components may be located at a same position or distributed over multiple network units. Some or all of the units may be adopted based on an actual need to achieve the objective of the solutions in the embodiments of the present disclosure.

In addition, the functional units in the various embodiments of the present disclosure may be integrated into a single processing unit, or the units may be physically separated, or two or more of the units may be integrated into a same unit.

In a case that the functions are implemented in a form of a software functional unit and sold or used as an independent product, the functions may be stored in a computer-readable storage medium. Based on such understanding, part of the technical solutions of the embodiments of the present disclosure which are essential or contribute to the conventional technology, or part of the technical solutions may be embodied in a form of a software product. The computer software product is stored in a storage medium and includes instructions for causing a computer device (such as a personal computer, a server, or a network device) to perform all or part of the method described in the embodiments of the present disclosure. The storage medium includes a USB disk, a mobile hard drive, a read-only memory (ROM), a random-access memory (RAM), a magnetic disk or optical disk, and other media capable of storing program codes.

Those of ordinary skills in the art can understand that all or part of the steps for implementing the method embodiments may be completed by hardware related to program instructions. The aforementioned program may be stored in a computer-readable storage medium. The program, when executed, performs the steps including the above method embodiments. The aforementioned storage medium includes a ROM, a RAM, a magnetic disk, an optical disk, or other media capable of storing program codes.

Finally, it should be noted that other embodiments of the present disclosure are apparent to those skilled in the art from consideration of the specification and practice of the present disclosure. The present disclosure is intended to cover any variation, application, or adaptation of the present disclosure. Such variation, application, or adaptation follows the general principles of the present disclosure and include common knowledge or common technical means in the art that are not disclosed in the present disclosure, and are not limited to the precise structures described above and shown in the drawings. Various modifications and alternations may be made without departing from the scope thereof. The scope of the present disclosure is limited by only the appended claims.

## Claims

1. A method for detecting short circuit of a discharger in a parallel UPS system, wherein the method is applied to a parallel UPS system, the parallel UPS system comprises a circuit subsystem (901) and a control subsystem (902), the control subsystem is configured to monitor an operating state of the circuit subsystem, the circuit subsystem comprises at least two UPS submodules (10), and the at least two UPS submodules share a common battery (105); and the method comprises:
controlling (302) a charging switch of a battery charger (103) in a target UPS submodule (10) to be closed in a case where the parallel UPS system operates under a condition of mains input without any battery, wherein the target UPS submodule is any UPS submodule from the at least two UPS submodules; and
detecting (304), for each of the UPS submodules, a current on a common battery input side of the UPS submodule, and determining whether a discharger (104) in the UPS submodule is short-circuited based on the current on the common battery input side of the UPS submodule.

2. The method according to claim 1, wherein the controlling a charging switch of a battery charger in a target UPS submodule to be closed comprises:
determining (602) whether a voltage on an input side of the common battery is abnormal, and determining that a discharger short circuit fault exists in the parallel UPS system in a case where the voltage on the input side of the common battery is abnormal; and
controlling (604) the charging switch of the battery charger in the target UPS submodule to be closed.

3. The method according to claim 1 or 2, wherein the determining whether a voltage on an input side of the common battery is abnormal comprises:
acquiring, in real time, a mains input voltage and the voltage on the input side of the common battery; and
determining that the voltage on the input side of the common battery is abnormal, in a case where a voltage difference between the mains input voltage and the voltage on the input side of the common battery keeps less than a first preset threshold for a first preset time period.

4. The method according to any preceding claim, wherein the controlling the charging switch of the battery charger in the target UPS submodule to be closed comprises:
Determining (602), based on a power walk-in timing signal, the target UPS submodule from the at least two UPS submodules; and
controlling (604) the charging switch of the battery charger in the target UPS submodule to be closed.

5. The method according to claim 4, further comprising:
controlling a switch transistor (Q1) of the battery charger in the target UPS submodule to be turned on based on a preset duty cycle.

6. The method according to claim 5, wherein the determining whether a discharger in the UPS submodule is short-circuited based on the current on the common battery input side of the UPS submodule comprises:
determining that the discharger in the UPS submodule is short-circuited, in a case where the current on the common battery input side of the UPS submodule keeps less than a second preset threshold for a second preset time period.

7. The method according to claim 6, further comprising:
controlling a mains input switch of the UPS submodule to be opened on determining that the discharger in the UPS submodule is short-circuited.

8. A parallel UPS system, wherein the parallel UPS system comprises a circuit subsystem (901) and a control subsystem (902), the control subsystem is configured to monitor an operating state of the circuit subsystem, the circuit subsystem comprises at least two UPS submodules, and the at least two UPS submodules share a common battery (105); and the control subsystem comprises:
a circuit control module (9021), configured to control a charging switch of a battery charger in a target UPS submodule to be closed in a case where the parallel UPS system operates under a condition of mains input without any battery, wherein the target UPS submodule is any UPS submodule from the at least two UPS submodules; and
a faulty detection module (9022), configured to detect, for each of the UPS submodules, a current on a common battery input side of the UPS submodule, and determine whether a discharger in the UPS submodule is short-circuited based on the current on the common battery input side of the UPS submodule.

9. A computer apparatus (100), comprising a memory (1002) and a processor (1001), wherein
the memory stores computer executable instructions; and
the processor executes the computer executable instructions stored in the memory to perform the method according to any one of claims 1 to 7.

10. A computer-readable storage medium, wherein the computer-readable storage medium has computer executable instructions stored thereon, and the computer executable instructions, when executed by a processor, perform the method according to any one of claims 1 to 7.

11. A computer program product, comprising a computer program, wherein the computer program, when executed by a processor, implements the method according to any one of claims 1 to 7.
